# EUROPEAN PATENT SPECIFICATION

(11) **EP 2 336 511 B1**
(45) Date of publication and mention of the grant of the patent: **28.08.2013**
(21) Application number: 10194772.9
(22) Date of filing: 13.12.2010
(51) Int. Cl.: F01N 1/16, F01N 13/18, F02D 9/10, F16K 27/02, F16K 1/22, F02D 9/04, F16K 1/226

(54) **Mounting arrangement of a throttle valve in an exhaust pipe of an internal combustion engine**
Montageanordnung eines Drosselventils auf einem Abgasrohr einer Brennkraftmaschine
Agencement de montage d'une vanne à papillon dans un tuyau d'échappement d'un moteur à combustion interne

(30) Priority: 17.12.2009 IT MI20092217
(43) Date of publication of application: 22.06.2011
(73) Proprietor: DELL'ORTO S.P.A., 20038 Seregno (Monza Brianza) (IT); Officine Meccaniche Giuseppe Lafranconi S.P.A., 23826 Mandello del Lario (LC) (IT)
(72) Inventor: Dell'Orto, Pierluigi, 20045, Besana Brianza (Milano) (IT); Gini, Daniele, 23900, Lecco (IT); Ronca, Paolo, 22070, Bregnano (Como) (IT)
(74) Representative: Faggioni, Giovanmaria

(56) References cited:
- EP-A1- 0 821 148
- EP-A1- 0 835 998
- DE-A1- 4 038 696
- DE-A1- 10 105 526
- DE-A1- 19 626 920
- GB-A- 548 188
- US-A1- 2006 260 868

## Description

### FIELD OF THE INVENTION

The present invention concerns the exhaust pipes of internal combustion engines and, more specifically, the exhaust pipes which are provided with means in the shape of a throttle valve for the choking of the passage of the gases.

### STATE OF THE PRIOR ART

The prior art provides to mount the throttle valve on a shaft which diametrically crosses the exhaust pipe. The shaft is under the control of actuation means - in the most recent art they consist of a motor actuated by a central electronic unit - to control the rotation thereof so as to vary the opening position of the throttle valve, thereby controlling the greater or smaller partialisation of the outflowing exhaust gases.

Devices of this type are described for example in DE-40 38 696, document published on 11.6.1992, and in EP-0.835.998, document published on 15.4.1998.

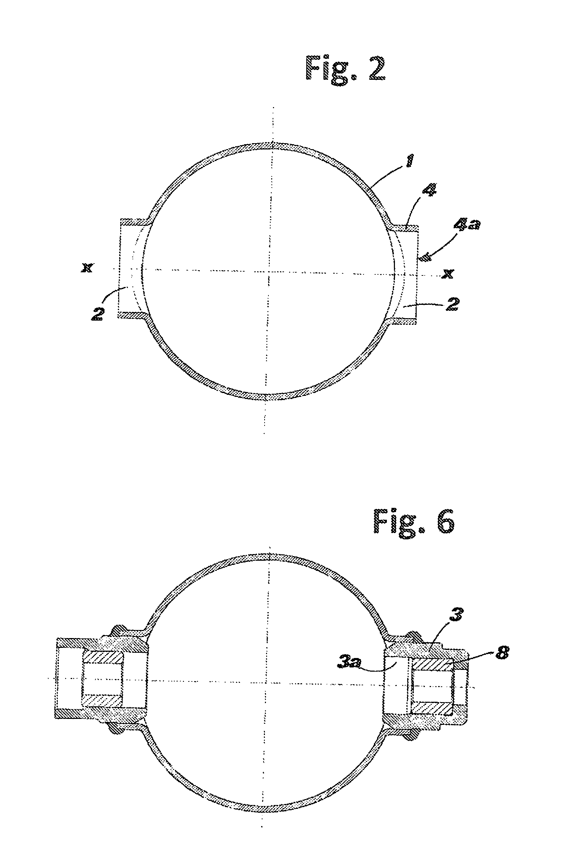

In document DE-40 38 696 there are provided, for supporting the throttle valve, two diametrically opposite seats which, at least in the arrangement according to fig. 2, consist of a perforation, the edge of which is deformed by deep drawing to form a collar for housing the shaft of the throttle valve; both in a first variant, wherein a ceramic bush is arranged between the shaft and the collar, and in a second variant, wherein the sole collar is provided, no welding operation is required, because the shaft is guided directly within the preformed seats. However, a device of this type has at least the following major drawbacks: the guide of the throttle valve shaft within the collars of the diametrically opposite, deep-drawn perforations, suffers from high seepage due to the gap between shaft and collars or, vice versa, from excessive friction on the collars; it implies difficulties in obtaining a perfect alignment of the guide seats; excessive friction and misalignment imply in turn a jerky movement, hence difficult to control and which leads to early wear, after a relatively short period of use; finally, while the presence of a ceramic bush reduces wear, however, it worsens the drawback of gas seepage, which occurs both between ceramic and collar (it is not advisable for the ceramic to be force-fitted - to avoid the risk of breakage - nor can it be welded to the metal collar) and between ceramic and shaft (the seat in the ceramic cannot be precision-machined). Moreover, a further drawback derives from the fact that the ceramic bush and the shaft have very different expansion coefficients and hence - especially in the case in question, wherein the various parts (shaft and collar, or shaft and ceramic bush) undergo high temperatures - in the impossibility of adopting a coupling with a suitably high slack in a cold system (since that would cause unacceptable seepage levels), between the ceramic bush and the shaft, or collar, compensation elements must be placed, capable of absorbing slack variations between cold system and warm system, during running,.

In document EP-0.835.998 (column 1, lines 20-34) it is stated that in known valves - and here reference is probably made to the same document DE-40 38 696 discussed above - the closure throttle is carried by a shaft or by a pair of pivots rotatably mounted in wall perforations of the tubular body, which form bearings. Such a valve causes sealing problems at the bearings, as well as control problems of the axial slack of the shaft or of the pivots in the bearings. These axial slacks cause undesired noise and lead to premature wear of the bearings. Moreover, the high temperatures, of the order of 1000°C, which result from the flow of hot exhaust gases, cause the expansion of the different members which make up the valve, which leads to undesirable variations of the manoeuvering torque.

Based on these premises, document EP-0.835.998 provides a single perforation for the flow of one end of the shaft of the throttle valve and - in a diametrically opposite position - a conical seat wherein the other ogival end of said shaft simply rests. In correspondence of said perforation, an arrangement is provided, wherein the shaft of the throttle valve is provided with a collar integral therewith, which is shaped to be guided with a wide slack within a cup-shaped seat, welded to a collar-shaped wall of the perforation. Between said collar integral to the shaft and the cup-shaped seat there are arranged spring means which, resting on said collar, are intended to push the entire throttle valve towards the opposite ogival seat, in order to ensure the maintenance of the correct position of the valve. Although this arrangement solves the problem of the noise due to the axial slacks of the shaft, through the use of said spring means, and mitigates both the problem of the undesirable manoeuvering torque variations, resulting from the different expansions of the throttle members, and the wear problem of the moving members, and hence it is also more effective against gas seepage, however, it is not free from drawbacks: as a matter of fact, a) firstly the construction thereof is more complex and hence more expensive; b) moreover also the mounting is more complex, because it forces at least to premount the shaft-collar assembly into said cup-shaped seat and then to insert such cup into the perforation of the pipe to perform the welding thereof on the pipe; c) and again, it provides no means to ensure the alignment of the two diametrically opposite rotation seats; and finally, although the presence of the spring means tends to reduce the manoeuvering torque variations, this torque remains, however - precisely due to the presence of the spring means - particularly high and hence at risk of sticking.

Furthermore, it must be taken into account that the invention is bound to find application particularly to a throttle valve arrangement, the actuation of which throttle valve is ensured by a motorised system, driven by electronic-control means; in an arrangement of this type it is essential that the rotation of the shaft of the throttle valve occurs with a minor effort, in order to allow the use of low-power motors. For this reason the most recent prior art veered towards providing mounting systems of the type of the one schematised in the fig. 2 of the above cited document DE-40 38 696, i.e. with a throttle shaft rotating on seats provided in two diametrically opposite perforations of the exhaust pipe.

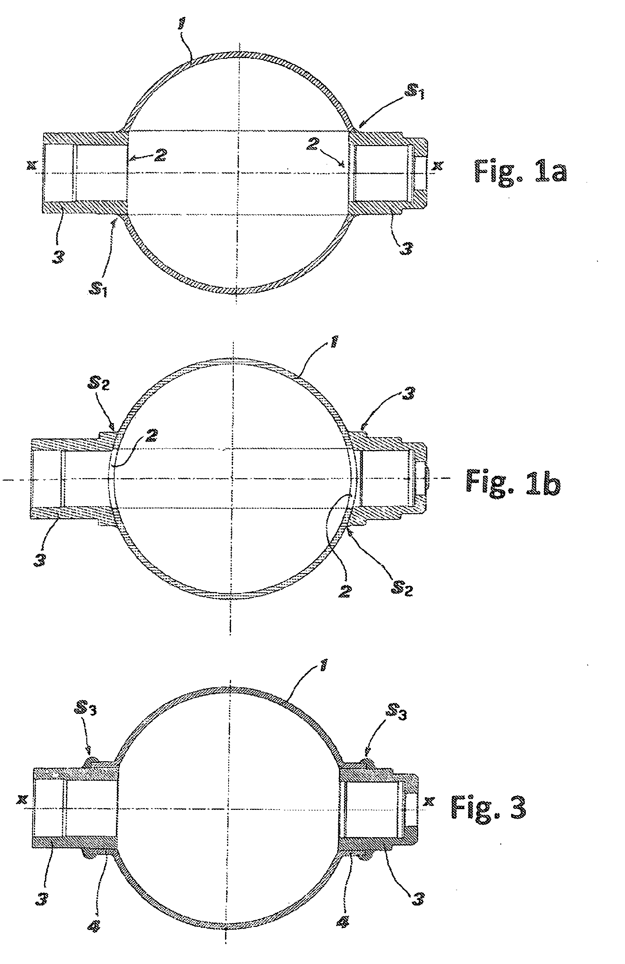

According to a first known arrangement, schematised in fig. 1a - after having arranged a cylindrical segment of exhaust pipe, on the wall of which two diametrically opposite perforations are formed - two respective bushed are introduced into said perforations; then the bushes are fastened on the pipe by welding. In order to retain these bushes in their correct coaxial position, during welding, the same are temporarily mounted on a support mandrel; by keeping the bushes in this position a MIG (Metal-arc Inert Gas) welding is performed, i.e. with welding material, along the edge of each of the bushes in contact with the respective perforation and on the outside of the wall of the exhaust pipe (see the welding position S1 in figure 1a).

Although this technique is very simple and inexpensive, however, it has the serious drawback that, under the effect of the heat developed during welding, the wall of the exhaust pipe tends to deform and hence to bring the bushes into severe misalignment; in order to realign the seats which house the manoeuvering shaft of the throttle valve, an additional finishing operation is therefore required, which increases manufacturing times and costs.

It is of course possible to resort to cold, laser welding, which, however, is more expensive and in any case does not fully solve the phenomenon of the deformation of the exhaust pipe wall.

According to another arrangement of the prior art, schematised in fig. 1b, more recently it has been suggested to manufacture said bushes with a widened welding rim, the head surface of which is brought into contact with the outer surface of the exhaust pipe, on the outline of the cited perforation, where TIG (Tungsten Inert Gas) welding is performed (see welding position S2 in figure 1b).

This technique, certainly more accurate and hence generally preferred, however, is not devoid from drawbacks. Firstly, the forming of the so-called welding rim is relatively complex and hence expensive, since the resting edge thereof must necessarily have a circular outline, with an axis centred on the bush axis, but at the same time the head surface thereof must rest precisely on the surface of the exhaust pipe, which has a cylindrical trend centred on the axis of the exhaust pipe, which is of course perpendicular to the bush axis.

In addition to the complexity of the shape of this bush rim, it must also be taken into account that different shapes of bushes must be manufactured, for use on exhaust pipes of different diameters, for the adaptation to the different curvatures of the cylindrical surfaces of these pipes. This evidently implies a worsening of the scale economies achievable by the standardisation of the components.

Finally, even this arrangement does not solve in a final way the problem of bush misalignment due to the deformation of the exhaust pipe surface during welding.

As a completion of the prior art overview set forth here above, US patent no. 6,581,721 is also pointed out, which has an arrangement wherein the welding of a shaft on a wall is performed on a lip portion of such wall. However, this arrangement has nothing to do with the invention, since here no shaft-supporting bush misalignment problem arises, since the shaft is fixed and the welding represents the fastening means directly on the support wall.

As a result of all that has been set forth above, since reference must be made to an earlier document, it is considered as closest prior art to the invention the one described in fig. 2 of DE-40 38 696; as a matter of fact in this document - as already stated - an arrangement is shown wherein the shaft is guided in free rotation on two diametrically opposite bushes. None of the other discussed documents can instead be taken as reference, i.e. neither EP-0.835.998 - where the shaft of the throttle valve is rotatably mounted on a pivoting bush at one only of the ends thereof - nor US-6,581,721, where the shaft is fixed, directly welded on the lips of the perforations of the exhaust pipe.

### PROBLEM AND SOLUTION

The problem at the basis of the invention is hence that of proposing a mounting arrangement, and a respective procedure, for applying a throttle valve in an exhaust pipe for internal combustion engines, of the type wherein the shaft of the throttle valve crosses two diametrically opposite perforations of the exhaust pipe and is guided in rotation in these perforations, which arrangement overcomes the mentioned drawbacks of the prior art and has at least the following features:
- gentle movement, with low manoeuvering torque, throughout the entire run, to actuate control precision,
- no risk of sticking in movements,
- no gas seepage,
- accurate and precise mounting, but at the same time easy and quick, with higher alignment accuracy of the pivoting means
- use of inexpensive welding technique, such as MIG, possibly performed also manually, and hence dramatically reduced overall costs.

This problem is solved through the features mentioned in claim 1, concerning the mounting and in claim 7 concerning the procedure. The dependent claims described preferred features of the invention.

### BRIEF DESCRIPTION OF THE DRAWINGS

Further features and advantages of the invention are in any case better evident from the following detailed description of a preferred embodiment, given purely as a non-limiting example and shown in the attached drawings, wherein:
Figs. 1a and 1b show the most recent prior art, of a first and of a second mounting arrangement, with a crosswise section of an exhaust pipe in correspondence of the two support bushes;
Fig. 2 shows a crosswise section of an exhaust pipe of a mounting arrangement according to the present invention, equally along the axis of the perforations for the housing of support bushes;
Fig. 3 shows a crosswise section fully similar to the one of fig. 2, but with the support bushes already mounted and welded in position;
Fig. 4 shows, in a schematic plan view, the profile of one of the perforations of the exhaust pipe, performed according to the invention, before the deep drawing of the perforations;
Figs. 5a and 5b show, in a section according to the axis of the two bushes, the mounting procedure according to the invention, which employs a pair of opposite centring studs,
fig. 6 shows a crosswise section fully similar to the one of fig. 3, but concerning a construction variant of the support bushes, with inserts shaped as graphite bushes.

### DETAILED DESCRIPTION OF THE PREFERRED EMBODIMENT

The figures 1a and 1b refer to the prior art and have already been described above.

According to the invention, and as appears evident from figures 2 and 3, in the wall 1 of the exhaust pipe two diametrically opposite perforations 2 are performed, each of which is meant to engage with a support bush 3.

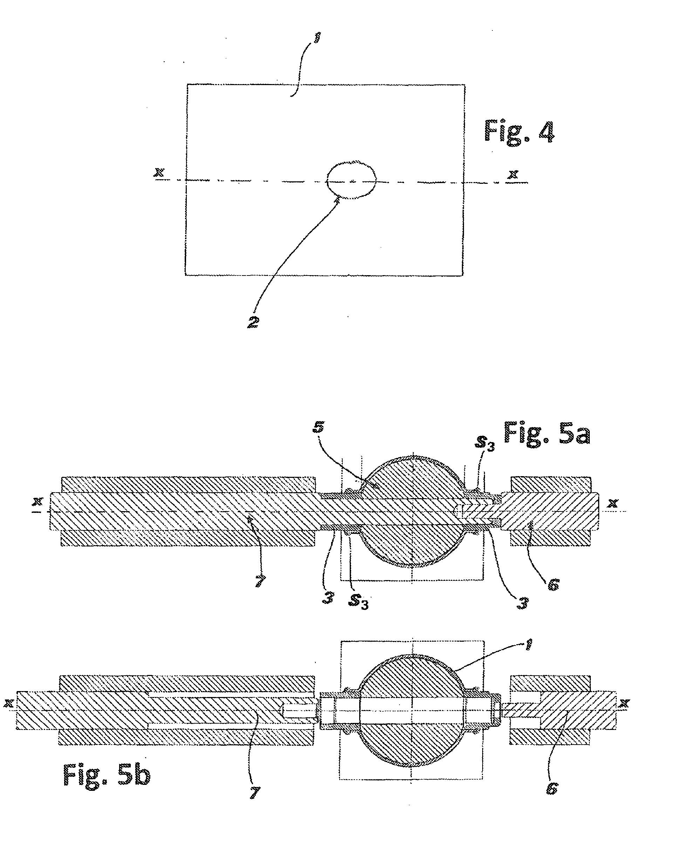

The perforations 2 can be manufactured as holes with a circular outline, or preferably with a non-circular, i.e. elliptical profile, as shown in fig. 4, for the purpose better specified in the following.

For the purpose of greatest accuracy, said perforations are performed with a laser cut, controlled electronically. Alternatively, the perforations can be performed also by shearing of te pipe wall (mechanical machining).

After the perforations, of the desired shape, before the mounting and welding of bush 3, an operation of deep drawing of the rim is carried out, so as to form a lip edge, which forms a collar 4, projecting towards the outside of the wall 1 of the exhaust pipe and of a size suitable for containing tightly bush 3.

Following this deep drawing operation, and of the resulting stretching of the metal sheet of pipe 1, the outer corner or edge 4a of collar 4 will take up a trend which - in case the original hole is circular - is undulated; should instead the original hole have an elliptical profile - suitably designed in connection with the expected stretching values of the deeply drawn metal sheet - the outer corner or edge 4a of collar 4 will take up a substantially planar development, in a plane perpendicular to axis X-X passing through the centre of perforations 2.

In order for the said original oval hole to have a profile suited to turn into a planar edge, the cutting of the perforations is preferably performed by laser, under numerical control.

Obtaining the result of a planar final edge 4a implies an evident advantage in the carrying out of the subsequent welding which - as stated in the following - can also be performed manually; while in the case of a deep drawing of a circular hole, wherefrom an undulated edge 4a necessarily results, the welding is somewhat more complex and will have to be carried out preferably by means of an electronic robot.

The perforations 2 can be performed, in addition to shearing operations, followed by deep drawing, also by means of hydroforming; in this case a plastic deformation of the wall 1 of the exhaust pipe occurs, not by mechanical tools, but by means of a liquid (water) which, brought to high pressure within the pipe (of course temporarily hermetically sealed at the two ends), causes - in correspondence of suitable cavities manufactured in a metal matrix arranged outside the pipe - two "domes" which, once opened at the top, originate the cited support collars.

For this opening, it can either be proceeded again by hydroforming, with a final step which produces also the sectioning of the tops, hence leaving at the end an open collar, or with a subsequent mechanical shearing step, by removing the top disc.

In either case, once collar 4 has been formed, the two pushes 3 are engaged, keeping them in a perfectly aligned position by means of a through mandrel (similarly to the prior art) or better, with centring studs aligned on the axis X-X, as schematically shown in figures 5a and 5b.

Fig. 5a shows a central stud 5 with reference planes, as well as two moving axial studs 6 and 7, engaged with and locked one on the other and against bushes 3; keeping this position the welding is then performed.

Fig. 5b shows instead disengaged studs 6 and 7, to free the portion of pipe 1 with the bushes 3 finally welded thereon.

After having carried out the provisional locking of bushes 3 - in the way schematised in fig. 5a - a welding S3 is performed (better visible in fig. 3), with welding material, between the free corner 4a of the two collars 4 and the wall of respective bushes 3.

According to an important feature of the invention, this welding is performed in a position - precisely schematised in point S3 - which is as far as possible from the surface of the exhaust pipe. This distance has the effect of ensuring that the welding heat does not affect but to a negligible extent the wall 1 of the exhaust pipe, so as to reduce the risk of deformation of this wall precisely during the welding step.

When implementing this mounting arrangement it has been possible to verify that, when the edge 4a of collar 4 is planar, it is possible to perform an extremely accurate welding S3 also with a manual technique. Wherever instead the edge 4a of collar 4 remains wavy, a manual welding has some difficulty and it is hence preferable to perform an automatic welding, under numeric control.

The alignment precision of support bushes 3 on common transversal axis X-X, which is obtained according to the present invention, allows to form in these bushes such accurate housing seats that the throttle valve shaft is introduced therein in a virtually sealing manner; and this without the rotation of the shaft being in any way braked due to this accuracy, forcing otherwise to increase the actuation torque.

According to the embodiment variant shown in fig. 6, this tight mounting of the throttle valve shaft is even further improved by arranging in between the seat 3a of bushes 3 and the outer surface of the throttle valve shaft, a bearing 8 consisting of a graphite bush. According to this arrangement, a better gas-proof seal is accomplished, together with a better sliding of the shaft in the seat thereof.

The just described mounting system of bushes 3 - employing alignment and welding studs 6 and 7 in conditions of bushes retained in a perfectly aligned position - allows to obtain all the features described in the introduction, and precisely:
a) - accurate and precise but at the same time easy and quick mounting, with a higher alignment precision of the pivoting means. The fact must be mentioned here that, on the one hand, the shifting of welding area S3 to a position as far as possible from the wall 1 of the exhaust pipe has the function of moving away the thermal effects of the welding from this wall, which wall is hence no longer subject to the known deformations and, on the other hand, this forced alignment of the bushes is maintained until the cooling of the welding; these two combined effects are hence capable of ensuring the maintenance of the alignment of the bushes on the X-X axis over time
b) - smooth movement, with low manoeuvering torque, throughout the entire travel, to actuate control precision. In this respect it must be reminded that such smooth movement is ensured by the perfect alignment of the bushes in combination with the accurate guiding of the throttle valve shaft within the bush seat
c) - lack of risk of sticking during movement. This risk is in turn avoided by above mentioned feature b). So more the better, since in the seat of the bushes there is integrated a graphite bush 8, according to the variant of fig. 6
d) - lack of gas seepage. Also this feature is ensured, on the one hand, by the tight, gas-proof fitting of the throttle valve shaft within the bush seats, even better if in each seat there is integrated a graphite bush 8 and, on the other hand, by the fact that the outer surface of the bushes is welded to the collar 4 of perforations 2 throughout the entire outline of edge 4a. In this respect it must be noted that the welding joins elements having the same expansion coefficient, so that stretching phenomena are ruled out which might cause detachments and gas seepage. Moreover, the shifting of the welding area to the position referred to as S3 has the function of moving away the thermal effects of the welding from the main part of the wall 1 of the exhaust pipe, which is hence no longer subject to those deformations which might lead to a misalignment of bushes 3 over time.
e) - use of inexpensive, MIG-type welding technique, possibly also by hand, and hence dramatically reduced overall costs. As mentioned, this result is obtained due to the fact that the outer edge 4a of the collars 4 of the perforations has a planar development.

Due to the arrangement according to the invention, it hence becomes possible to mount the throttle valve support shaft without any further machining, subsequent to the welding one.

It must be highlighted here that when reference is made to the mounting of the bushes on the exhaust pipe, both the actual exhaust pipe and - or preferably - an exhaust pipe portion to be later joined to the actual exhaust pipe are meant. Such a pipe portion may be 90 mm long for example. This need to work on a pipe portion derives from the fact that, after mounting bushes 3, the mounting fitting of the throttle valve and of the respective actuation shaft must also be carried out; and this further fitting would be extremely difficult - if not impossible - on the finished exhaust pipe.

However, it is understood that the invention must not be considered limited to the particular arrangement shown above, which represents only an exemplifying embodiment thereof, but that several variants are possible, all within the reach of a person skilled in the field, without departing from the scope of protection of the invention, as defined by the following claims.

## Claims

1. Mounting arrangement of a throttle valve in an exhaust pipe of an internal combustion engine, of the type wherein the exhaust pipe, or a portion thereof, has on the peripheral surface thereof a pair of diametrically opposite perforations, in correspondence of each of which pivoting means of a support shaft of the throttle valve are mounted, the ends of which project beyond the walls of the exhaust pipe, to one of said ends motorised actuation means being connected, **characterised in that**
each of said perforations has a lip-shaped edge, forming a support collar (4, 4a), which projects towards the outside of the wall (1) of the exhaust pipe,
said pivoting means of said support shaft consist of two metal bushes (3), tightly fitting in said support collar (4, 4a) and welded thereto in a gas-proof sealed manner, the welding of the bushes being performed in correspondence of the edge of said collar, in a position as far as possible from the surface of the exhaust pipe, and
pivoting seats are formed in said metal bushes (3), wherein said two ends of the support shaft are guided in a gas-proof, sealed manner.

2. Mounting arrangement as claimed in claim 1, **characterised in that** said pivoting seats are tightly fitted in said metal bushes (3).

3. Mounting arrangement as claimed in claim 1 or 2, **characterised in that** bearings (8) consisting of graphite bushes are embedded in said pivoting means, forming gas-proof guides of said support shaft.

4. Mounting arrangement as claimed in claim 1, **characterised in that** said lip-shaped edge forming a support collar (4, 4a) is obtained by deep drawing.

5. Mounting arrangement as claimed in 1 or 4, **characterised in that** said perforation has, before the deep drawing, an elliptical profile with a major axis parallel to the pipe axis.

6. Mounting arrangement as claimed in claim 5, **characterised in that** said elliptical-profile-perforation is formed by laser cutting, under numerical control.

7. Mounting process of a throttle valve in an exhaust pipe of the gases of an internal combustion engine, of the type wherein the exhaust pipe, or a portion thereof, has on the peripheral surface a pair of diametrically opposite perforations in correspondence of each of which pivoting means of a support shaft of the throttle valve are mounted, the ends of which project beyond the walls of the exhaust pipe,
**characterised in that**
a deformation by deep drawing or by hydro-forming, of the surface portion of the exhaust pipe surrounding a respective perforation is firstly performed, so as to form on each of said perforations a lip-shaped edge, making up the support collar (4, 4a) of respective pivoting bushes (3), which collar projects towards the outside of the wall (1) of the exhaust pipe,
the fitting of said metal bushes (3) on respective support collars (4) is performed, with the use of locking means of said bushes in an aligned position on the rotation axis (X-X) of said support shaft, and
the gas-proof welding of said metal bushes (3) is then performed on the respective support collars (4) thereof, in correspondence of the edge of said collar, in a position as far as possible from the surface of the exhaust pipe.

8. Mounting process as claimed in claim 7, **characterised in that** said perforations are performed with an elliptical profile having the major axis parallel to the pipe axis.

9. Mounting process as claimed in claim 7 or 8, **characterised in that** said elliptical-profile perforation is performed by laser cutting, under numerical control.

10. Mounting process as claimed in claim 7 or 8, **characterised in that** said elliptical-profile perforation is performed causing a plastic deformation in the wall of the exhaust pipe, by hydroforming on a metal matrix arranged outside the pipe and provided with suitable dome-shaped cavities which, once opened at the top, act as the mentioned support collars.

11. Mounting process as claimed in claim 10, **characterised in that** for the opening of the top of said domes a final, hydro-forming step is performed, which sections the top of the domes and/or a final step of mechanical shearing, removing a top disc.

12. Mounting process as claimed in any one of claims 7 to 11, **characterised in that**, during the welding step, as locking means of said bushes in a position aligned on the rotation axis (X-X) of said support shaft, a through mandrel is used.

13. Mounting process as claimed in claim 12, **characterised in that** said through mandrel consists of at least one pair of axially-movable centring studs (6, 7), engaged with and locked one on the other and against the bushes (3).

14. Mounting process as claimed in claim 13, **characterised in that** said through mandrel further cooperates with a central stud (5) provided with reference planes for the exhaust pipe.

## Patentansprüche

1. Montageanordnung eines Drosselventils in einem Abgasrohr einer Brennkraftmaschine, vom Typ, bei dem das Abgasrohr oder ein Teil desselben auf seiner Umfangsfläche ein Paar diametral gegenüberliegende Löcher aufweist, wobei in Übereinstimmung damit Dreheinrichtungen einer Trägerwelle des Drosselventils montiert sind, deren Enden über die Wände des Abgasrohres hinausragen, wobei eine motorisierte Betätigungseinrichtung mit einem der Enden verbunden ist, **dadurch gekennzeichnet, dass**
jedes der Löcher einen lippenförmigen Rand aufweist, der einen Auflagebund (4, 4a) bildet, der in Richtung zur Außenseite der Wand (1) des Abgasrohres vorragt,
wobei die Dreheinrichtungen der Trägerwelle aus zwei Metallbuchsen (3) bestehen, die sich in dem Auflagebund (4, 4a) in Presspassung befinden und daran in einer gasdichten Weise geschweißt sind, wobei das Schweißen der Buchsen entsprechend dem Rand des Bundes in einer Position durchgeführt, die so weit wie möglich von der Oberfläche des Abgasrohres entfernt ist, und
Drehlager in den Metallbuchsen (3) ausgebildet sind, wobei besagte zwei Enden der Trägerwelle in einer gasdichten Weise geführt werden.

2. Montageanordnung nach Anspruch 1, **dadurch gekennzeichnet, dass** sich die Drehlager in den Metallbuchsen (3) in Presspassung befinden.

3. Montageanordnung nach Anspruch 1 oder 2, **dadurch gekennzeichnet, dass** Lager (8), die aus Graphitbuchsen bestehen, in den Dreheinrichtungen eingebettet sind, und gasdichte Führungen der Trägerwelle bilden.

4. Montageanordnung nach Anspruch 1, **dadurch gekennzeichnet, dass** der lippenförmige Rand, der einen Auflagebund (4, 4a) bildet, durch Tiefziehen erhalten ist.

5. Montageanordnung nach Anspruch 1 oder 4, **dadurch gekennzeichnet, dass** das Loch vor dem Tiefziehen ein elliptisches Profil mit einer zur Rohrachse parallelen Hauptachse aufweist.

6. Montageanordnung nach Anspruch 5, **dadurch gekennzeichnet, dass** das Loch mit elliptischem Profil durch Laserschneiden mit numerischer Steuerung gebildet ist.

7. Verfahren zur Montage eines Drosselventils in einem Abgasrohr der Gase einer Brennkraftmaschine, vom Typ, bei dem das Abgasrohr oder ein Teil desselben auf der Umfangsfläche ein Paar diametral gegenüberliegende Löcher aufweist, wobei in Übereinstimmung damit Dreheinrichtungen einer Trägerwelle des Drosselventils montiert sind, deren Enden über die Wände des Abgasrohres hinausragen, **dadurch gekennzeichnet, dass**
eine Verformung durch Tiefziehen oder durch Hydroformen des Flächenabschnitts des Abgasrohres, der ein jeweiliges Loch umgibt, als erstes durchgeführt wird, um an jedem der Löcher einen lippenförmigen Rand auszubilden, der den Auflagebund (4, 4a) von jeweiligen Drehbuchsen (3) bildet, wobei der Bund in Richtung zur Außenseite der Wand (1) des Abgasrohres vorragt,
das Einbauen der Metallbuchsen (3) auf jeweiligen Auflagebunden (4) unter Verwendung von Verriegelungseinrichtungen der Buchsen in einer ausgerichteten Position auf der Drehachse (X-X) der Trägerwelle durchgeführt wird, und
das gasdichte Schweißen der Metallbuchsen (3) dann an den jeweiligen Auflagebunden (4) in Übereinstimmung mit dem Rand des Bundes in einer Position durchgeführt wird, die so weit wie möglich von der Oberfläche des Abgasrohres entfernt ist.

8. Montageverfahren nach Anspruch 7, **dadurch gekennzeichnet, dass** die Löcher mit einem elliptischen Profil mit einer zur Rohrachse parallelen Hauptachse ausgeführt werden.

9. Montageverfahren nach Anspruch 7 oder 8, **dadurch gekennzeichnet, dass** das Loch mit einem elliptischen Profil durch Laserschneiden unter numerischer Steuerung ausgeführt wird.

10. Montageverfahren nach Anspruch 7 oder 8, **dadurch gekennzeichnet, dass** das Loch mit einem elliptischen Profil durch Verursachen einer plastischen Verformung in der Wand des Abgasrohres durch Hydroformen auf einer Metallmatrix, die außerhalb des Rohres angeordnet und mit geeigneten kuppelformigen Hohlräumen versehen ist, die nach Öffnung an der Oberseite als die erwähnten Auflagebunde agieren.

11. Montageverfahren nach Anspruch 10, **dadurch gekennzeichnet, dass** zum Öffnen der Oberseite der Kuppeln ein finaler Hydroformschritt, der die Oberseite der Kuppeln zerteilt, und/oder ein finaler Schritt des mechanischen Scherens durchgeführt wird, wodurch eine obere Scheibe entfernt wird.

12. Montageverfahren nach einem der Ansprüche 7 bis 11, **dadurch gekennzeichnet, dass** während des Schweißschrittes ein Durchgangsdorn als eine Verriegelungseinrichtung der Buchsen in einer mit der Drehachse (X-X) der Trägerwelle fluchtenden Position verwendet wird.

13. Montageverfahren nach Anspruch 12, **dadurch gekennzeichnet, dass** der Durchgangsdorn aus mindestens einem Paar von axial bewegbaren Zentrierbolzen (6, 7) besteht, die miteinander in Eingriff stehen und verriegelt sind an den Buchsen (3).

14. Montageverfahren nach Anspruch 13, **dadurch gekennzeichnet, dass** der Durchgangsdorn ferner mit einem zentralen Zapfen (5) zusammenwirkt, der mit Bezugsebenen für das Abgasrohr versehen ist.

## Revendications

1. Agencement de montage d'un papillon des gaz dans un tuyau d'échappement d'un moteur à combustion interne, du type dans lequel le tuyau d'échappement, ou une partie de celui-ci, comporte, sur sa surface périphérique, une paire de perforations diamétralement opposées, en correspondance de chacune desquelles sont montés des moyens de pivotement d'un arbre de support du papillon des gaz, dont les extrémités font saillie au-delà des parois du tuyau d'échappement, des moyens d'actionnement étant raccordés à l'une desdites extrémités, **caractérisé en ce que**
chacune desdites perforations comporte un bord en forme de lèvre, formant une collerette de support (4, 4a), qui fait saillie vers l'extérieur de la paroi (1) du tuyau d'échappement,
lesdits moyens de pivotement dudit arbre de support consistent en deux douilles de métal (3), s'emboîtant étroitement dans ladite collerette de support (4, 4a) et soudées à celle-ci d'une manière étanche aux gaz, le soudage des douilles étant réalisé en correspondance du bord de ladite collerette, dans une position la plus éloignée possible de la surface du tuyau d'échappement, et
des sièges de pivotement sont ménagés dans lesdites douilles de métal (3), lesdites deux extrémités de l'arbre de support étant guidées d'une manière étanche aux gaz.

2. Agencement de montage selon la revendication 1, **caractérisé en ce que** lesdits sièges de pivotement sont étroitement emboîtés dans lesdites douilles de métal (3).

3. Agencement de montage selon la revendication 1 ou 2, **caractérisé en ce que** des paliers (8) consistant en des douilles en graphite sont intégrés dans lesdits moyens de pivotement, formant des guides étanches aux gaz dudit arbre de support.

4. Agencement de montage selon la revendication 1, **caractérisé en ce que** ledit bord en forme de lèvre formant une collerette de support (4, 4a) est obtenu par emboutissage profond.

5. Agencement de montage selon la revendication 1 ou 4, **caractérisé en ce que** ladite perforation a, avant l'emboutissage profond, un profil elliptique avec un grand axe parallèle à l'axe du tuyau.

6. Agencement de montage selon la revendication 5, **caractérisé en ce que** ladite perforation à profil elliptique est formée par découpe au laser, sous commande numérique.

7. Procédé de montage d'un papillon des gaz dans un tuyau d'échappement des gaz d'un moteur à combustion interne, du type dans lequel le tuyau d'échappement, ou une partie de celui-ci, comporte, sur sa surface périphérique, une paire de perforations diamétralement opposées, en correspondance de chacune desquelles sont montés des moyens de pivotement d'un arbre de support du papillon des gaz, dont les extrémités font saillie au-delà des parois du tuyau d'échappement, **caractérisé en ce que**
une déformation par emboutissage profond ou par hydroformage de la partie de surface du tuyau d'échappement entourant une perforation respective est tout d'abord effectuée, afin de former, sur chacune desdites perforations, un bord en forme de lèvre, constituant la collerette de support (4, 4a) de douilles de pivotement (3) respectives, laquelle collerette fait saillie vers l'extérieur de la paroi (1) du tuyau d'échappement,
l'emboîtement desdites douilles de métal (3) sur des collerettes de support (4) respectives est réalisé, à l'aide de moyen de verrouillage desdites douilles dans une position alignée sur l'axe de rotation (X-X) dudit arbre de support, et
le soudage étanche aux gaz desdites douilles de métal (3) est ensuite effectué sur leurs collerettes de support (4, 4a) respectives, en correspondance du bord de ladite collerette, dans une position la plus éloignée possible de la surface du tuyau d'échappement.

8. Procédé de montage selon la revendication 7, **caractérisé en ce que** lesdites perforations sont réalisées avec un profil elliptique ayant le grand axe parallèle à l'axe du tuyau.

9. Procédé de montage selon la revendication 7 ou 8, **caractérisé en ce que** ladite perforation à profil elliptique est formée par découpe au laser, sous commande numérique.

10. Procédé de montage selon la revendication 7 ou 8, **caractérisé en ce que** ladite perforation à profil elliptique est réalisée, provoquant une déformation plastique dans la paroi du tuyau d'échappement, par hydroformage sur une matrice de métal située à l'extérieur du tuyau et pourvue de cavités bombées appropriées qui, une fois ouvertes au sommet, servent de collerettes de support précitées.

11. Procédé de montage selon la revendication 10, **caractérisé en ce que** pour l'ouverture du sommet desdits dômes une étape d'hydroformage finale est réalisée, qui coupe le sommet des dômes et/ou une étape finale de cisaillement mécanique est réalisée, enlevant un disque supérieur.

12. Procédé de montage selon l'une quelconque des revendications 7 à 11, **caractérisé en ce que**, au cours de l'étape de soudage, en tant que moyen de verrouillage desdites douilles dans une position en alignement sur l'axe de rotation (X-X) dudit arbre de support, un mandrin traversant est utilisé.

13. Procédé de montage selon la revendication 12, **caractérisé en ce que** ledit mandrin traversant consiste en au moins une paire de goujons de centrage mobiles axialement (6, 7), engagés avec les douilles (3), et verrouillés l'un sur l'autre et contre les douilles (3).

14. Procédé de montage selon la revendication 13, **caractérisé en ce que** ledit mandrin coopère, en outre, avec un goujon central (5) ayant des plans de référence pour le tuyau d'échappement.
